# EUROPÄISCHE PATENTANMELDUNG

(11) **EP 3 598 959 A1**
(43) Veröffentlichungstag der Anmeldung: **29.01.2020**
(21) Anmeldenummer: 18186049.5
(22) Anmeldetag: 27.07.2018
(51) Int. Cl.: A61G 5/04, A61G 5/10, A61G 5/06, B62K 11/00

(54) **SELBSTBALANCIERENDES FAHRZEUG**

(71) Anmelder: Scewo AG, 8406 Winterthur (CH)
(72) Erfinder: Gemperle, Thomas, 8400 Winterthur (CH)
(74) Vertreter: Dr. Gassner & Partner mbB

(57) **Zusammenfassung**

Selbstbalancierendes Fahrzeug, umfassend zwei axial voneinander beabstandete, an einem Grundkörper (2) angebrachte Räder (3, 4), einen mit wenigstens einem Rad (3, 4) gekoppelten elektrischen Antrieb, eine Steuerungseinrichtung, die dazu ausgebildet ist, durch Ansteuern des Antriebs das Fahrzeug im Gleichgewicht zu halten, eine Aufnahme zum Tragen und Befördern einer Last, wobei das Fahrzeug einen Verstellmechanismus (7) zum linearen Verschieben der Aufnahme aufweist, der so angeordnet ist, dass die Aufnahme durch die lineare Verschiebung sowohl entlang der Längsachse als auch entlang der Hochachse des Fahrzeugs verstellbar ist.

## Beschreibung

Die Erfindung betrifft ein selbstbalancierendes Fahrzeug, umfassend zwei axial voneinander beanstandete, an einem Grundkörper angebrachte Räder, einen mit wenigstens einem Rad gekoppelten elektrischen Antrieb, eine Steuerungseinrichtung, die dazu ausgebildet ist, durch Ansteuern des Antriebs das Fahrzeug im Gleichgewicht zu halten und eine Aufnahme zum Tragen und Befördern einer Last.

Es sind selbstbalancierende Fahrzeuge bekannt, die entweder einen feststehenden, nicht höhenverstellbaren Sitz oder einen in vertikaler Richtung verstellbaren Sitz aufweisen. Eine Anpassung der Sitzhöhe ist vorteilhaft, wenn der Benutzer von einer anderen Sitzfläche auf das Fahrzeug umsteigt oder das Fahrzeug verlässt. Durch das Absenken des Sitzes wird ermöglicht, dass der Benutzer mit dem Fahrzeug soweit an einen Tisch heranfahren kann, dass sich seine Beine unterhalb einer Tischplatte befinden. In anderen Situationen ist eine erhöhte Sitzposition vorteilhaft, beispielsweise wenn der Benutzer auf Augenhöhe mit anderen stehenden Personen kommunizieren möchte.

Der Erfindung liegt die Aufgabe zugrunde, ein selbstbalancierendes Fahrzeug anzugeben, das eine komfortable Sitzverstellung ermöglicht.

Zur Lösung dieser Aufgabe ist bei einem selbstbalancierenden Fahrzeug der eingangs genannten Art erfindungsgemäß vorgesehen, dass es einen Verstellmechanismus zum linearen Verschieben der Aufnahme aufweist, der so angeordnet ist, dass die Aufnahme durch die lineare Verschiebung sowohl entlang der Längsachse als auch entlang der Hochachse des Fahrzeugs verstellbar ist.

Durch die Erfindung ergibt sich der Vorteil, dass der Sitz aufgrund der zur horizontalen Achse geneigten Achse gleichzeitig horizontal und vertikal verstellbar ist. Somit benötigt der Verstellmechanismus lediglich einen einzigen Antrieb.

Bei dem erfindungsgemäßen Fahrzeug wird es bevorzugt, dass der Verstellmechanismus einen Linearantrieb aufweist. Der Linearantrieb kann beispielsweise als Spindeltrieb ausgebildet sein. Ein derartiger Linearantrieb ist besonders platzsparend.

Mit besonderem Vorteil kann es bei dem erfindungsgemäßen Fahrzeug vorgesehen sein, dass der Verstellmechanismus stufenlos verstellbar ist. Die stufenlose Verstellung ermöglicht einen besonders einfachen Transfer eines Benutzers auf das Fahrzeug und von dem Fahrzeug.

Es liegt auch im Rahmen der Erfindung, dass der Verstellmechanismus einen Teleskopauszug aufweist, der einerseits an dem Grundkörper und andererseits an dem Sitz angebracht ist. Wenn der Linearantrieb des Verstellmechanismus aktiviert wird, wird der bewegbare Teil des Teleskopauszugs verschoben, wodurch der Sitz in der gewünschten Weise angehoben bzw. abgesenkt und nach vorne bzw. nach hinten bewegt wird.

Vorzugsweise weist der Teleskopauszug des erfindungsgemäßen Rollstuhls eine linke und eine rechte ausziehbare Teleskopschiene auf, die durch eine Verbindungsplatte miteinander verbunden sind. Wenn der Linearantrieb des Verstellmechanismus aktiviert wird, werden die beiden Teleskopschienen gleichzeitig und parallel aus- und eingefahren. Dementsprechend wird der mit dem beweglichen Teil des Teleskopauszugs verbundene Sitz in der gewünschten Richtung bewegt und angehoben oder abgesenkt.

Eine Ausführung des erfindungsgemäßen Fahrzeugs sieht vor, dass es zum Befahren einer Treppe oder einer Rampe geeignet ist und in einer ersten, im Wesentlichen für einen ebenen Untergrund vorgesehenen Betriebsart durch die an dem Grundkörper angebrachten Räder und in einer zweiten, zum Befahren einer Treppe oder einer Rampe vorgesehenen Betriebsart mittels eines ein Umschlingungsmittel aufweisenden Raupen- oder Kettenfahrwerks antreibbar ist. In der ersten Betriebsart wird das Fahrzeug durch die beiden voneinander beanstandeten Räder angetrieben, die mit einem elektrischen Antrieb gekoppelt sind. Das Raupen- oder Kettenfahrwerk kann dazu in eine erhöhte Position bewegt werden. In der zweiten, zum Befahren einer Treppe oder einer Rampe vorgesehenen Betriebsart wird das Raupen- oder Kettenfahrwerk durch einen elektrischen Antrieb angetrieben. Die beiden Räder befinden sich dabei in einer erhöhten Position.

Bei dem erfindungsgemäßen Fahrzeug wird es besonders bevorzugt, dass die Aufnahme als Sitz ausgebildet ist, an dem eine mit dem Sitz verstellbare Fußstütze angeordnet ist. Die Fußstütze ist fest mit dem Sitz verbunden und somit gemeinsam mit dem Sitz verstellbar.

Besonders bevorzugt wird eine Ausführung des erfindungsgemäßen Fahrzeugs, bei der der Sitz so weit nach vorne verstellbar ist, dass sich die Fußstütze vor einem oder dem Raupen- oder Kettenfahrwerk befindet.

Das erfindungsgemäße Fahrzeug kann insbesondere als Rollstuhl ausgebildet sein.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: ein Ausführungsbeispiel eines als Rollstuhl ausgebildeten erfindungsgemäßen Fahrzeugs in einer perspektivischen Ansicht,
- Fig. 2: den Rollstuhl von Fig. 1 in einer Seitenansicht,
- Fig. 3: den Rollstuhl von Fig. 1 nach dem Verstellen des Sitzes in eine untere und nach vorne verschobene Position,
- Fig. 4: den Rollstuhl von Fig. 3 in einer Seitenansicht,
- Fig. 5: den Grundkörper des Rollstuhls mit Rädern und einem Raupenfahrwerk,
- Fig. 6: den Verstellmechanismus des als Rollstuhl ausgebildeten erfindungsgemäßen Fahrzeugs,
- Fig. 7: eine schematische Darstellung des Verstellvorgangs in einer Seitenansicht,
- Fig. 8: einen Schnitt entlang der Linie VIII-VIII von Fig. 7, und
- Fig. 9: eine ähnliche Darstellung wie Fig. 7 mit abgesenktem Sitz.

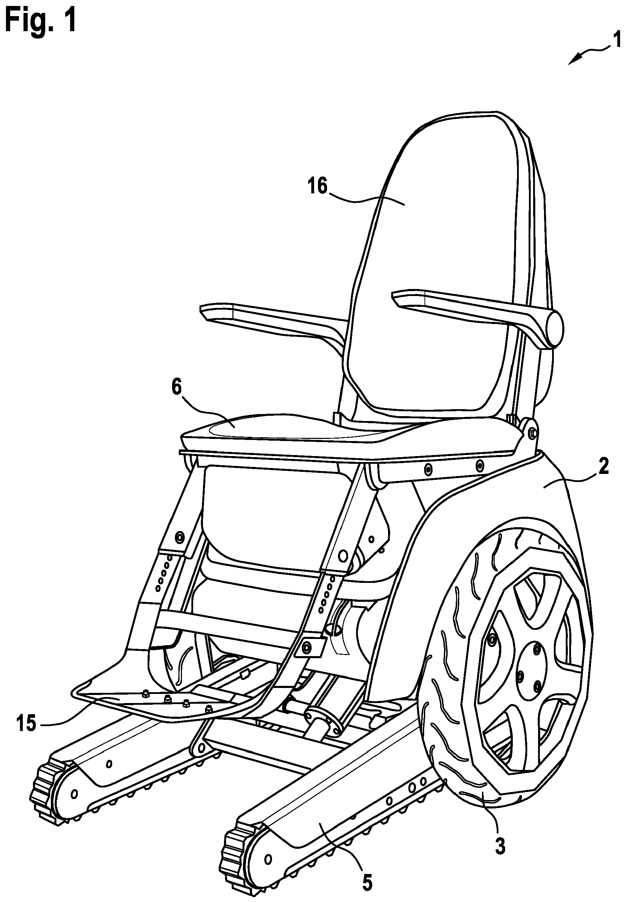

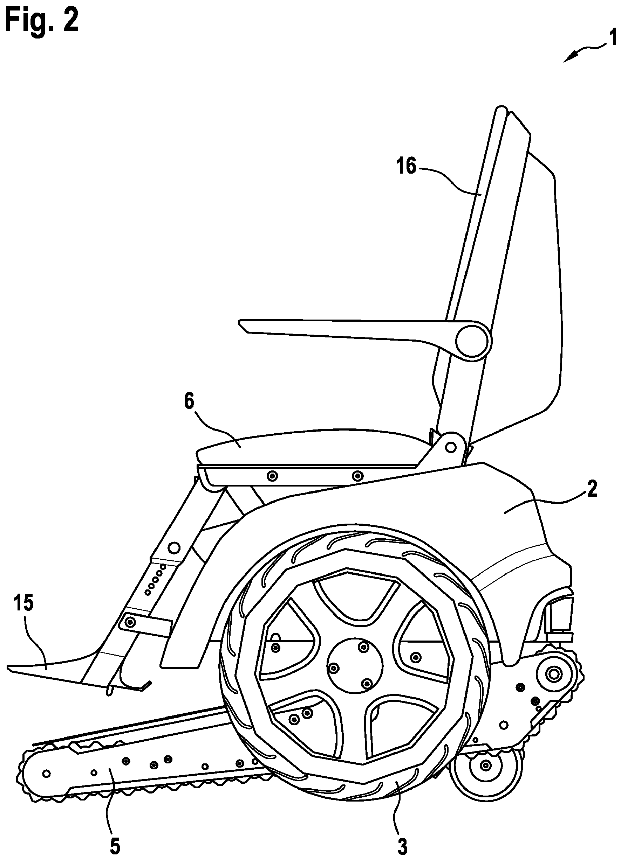

Der in den Fig. 1 bis 4 gezeigte Rollstuhl 1 umfasst einen Grundkörper 2, der an beiden Seiten mit Rädern 3, 4 versehen ist. Der Rollstuhl 1 weist einen nicht näher dargestellten elektrischen Antrieb auf, durch den die Räder 3, 4 antreibbar sind. Die Räder 3, 4 dienen zum Fahren auf einem im Wesentlichen ebenen Untergrund. Fig. 1 ist eine perspektivische Ansicht, Fig. 2 ist eine Seitenansicht.

Zusätzlich weist der Rollstuhl 1 ein Raupenfahrwerk 5 auf, das ein Umschlingungsmittel umfasst. Mittels des Raupenfahrwerks 5 ist der Rollstuhl 1 in der Lage, eine Treppe oder eine Rampe zu befahren. In dieser zweiten Betriebsart befinden sich die Räder 3, 4 in einer erhöhten Position. In der ersten Betriebsart, wenn der Rollstuhl 1 hingegen mittels der Räder 3, 4 bewegt wird, befindet sich das Raupenfahrwerk 5 in einer erhöhten Position. Mittels einer Steuerungseinrichtung (nicht gezeigt) kann der Antrieb so angesteuert werden, dass der den Benutzer tragende Rollstuhl lediglich von den Rädern 3, 4 getragen und somit balanciert wird. Dementsprechend ist der Rollstuhl 1 als selbstbalancierendes Fahrzeug ausgebildet.

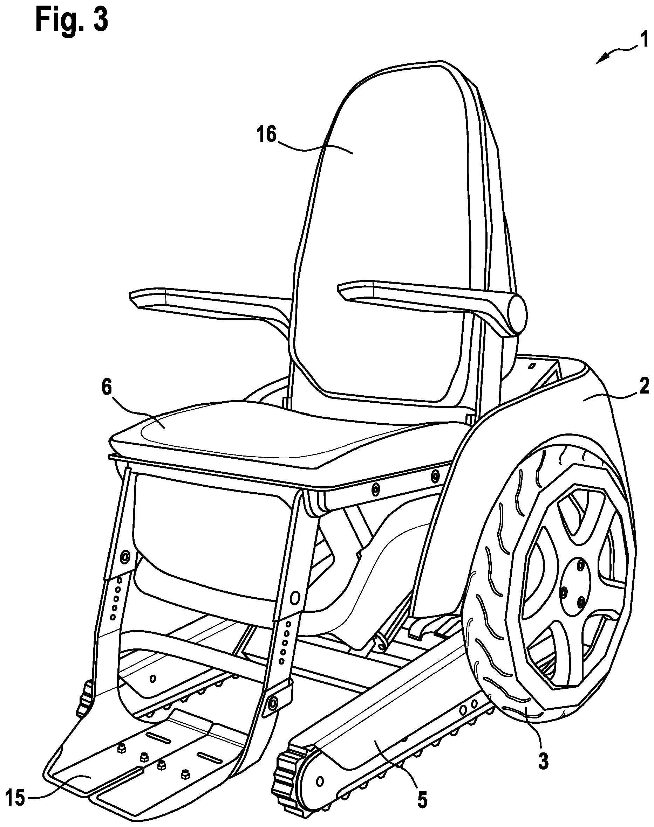

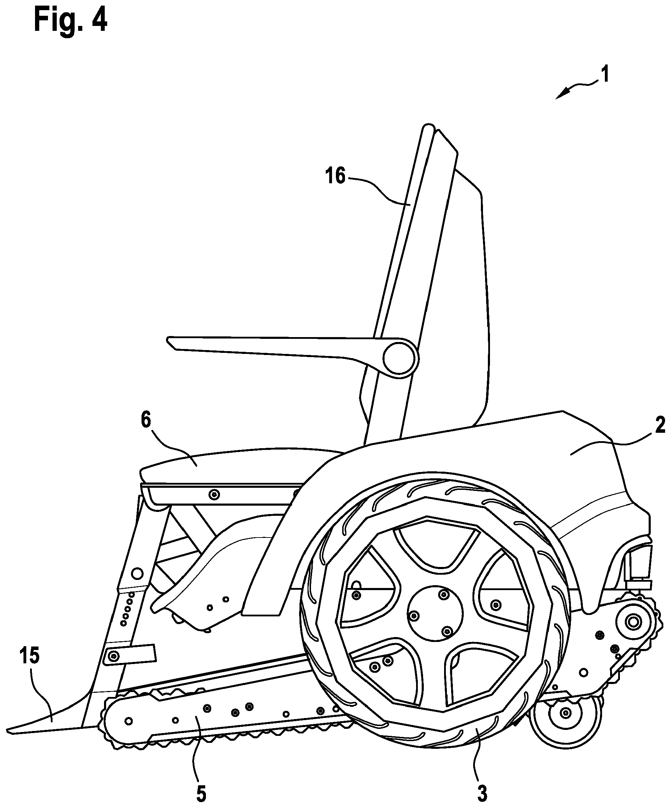

Der Rollstuhl 1 umfasst eine als Sitz 6 ausgebildete Aufnahme. Der Sitz 6 ist in Fig. 1 und Fig. 2 in einer erhöhten und in Fig. 3 und Fig. 4 in einer abgesenkten Position dargestellt. Der Rollstuhl 1 weist einen Verstellmechanismus auf, der dazu ausgebildet ist, den Sitz 6 durch eine lineare Verschiebung entlang einer zur horizontalen Achse geneigten Achse zu verstellen.

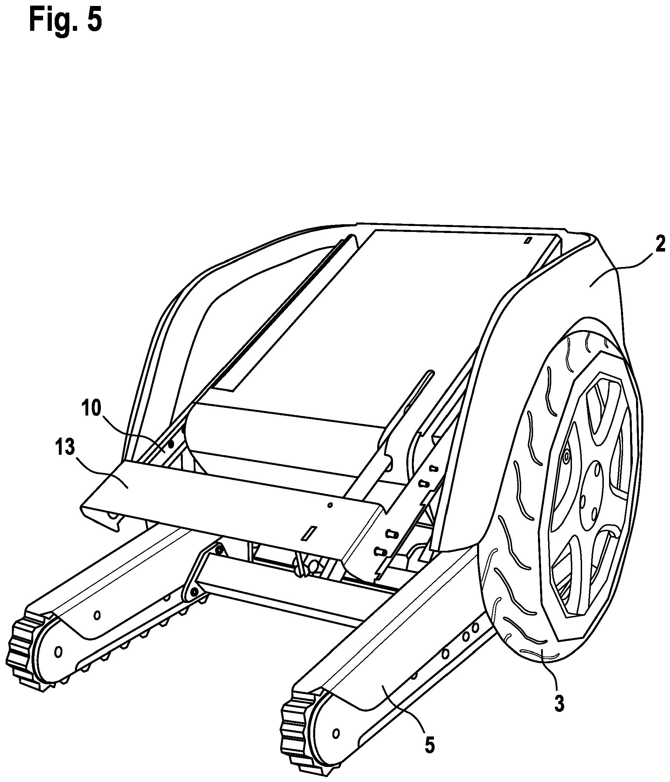

Fig. 5 zeigt den Grundkörper 2 des Rollstuhls 1 mit den Rädern 3, 4 und dem Raupenfahrwerk 5.

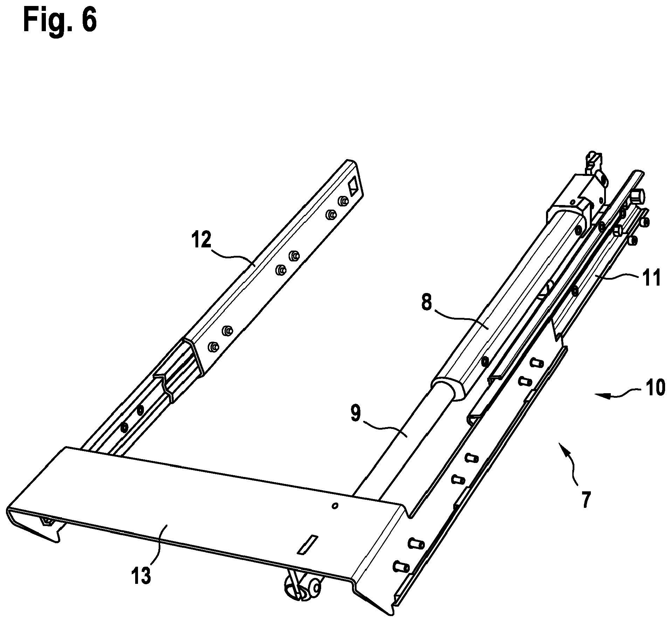

Fig. 6 zeigt die wesentlichen Komponenten des Verstellmechanismus 7. Der in Fig. 6 gezeigte Verstellmechanismus 7 umfasst einen Linearantrieb 8, der in dem dargestellten Ausführungsbeispiel als Spindeltrieb ausgebildet ist. Bei aktiviertem Linearantrieb 8 kann eine Spindel 9 linear ein- oder ausgefahren werden. Der Verstellmechanismus 7 umfasst einen Teleskopauszug 10 mit einer linken Teleskopschiene 11 und einer rechten Teleskopschiene 12. Ein feststehender Teil der beiden Teleskopschienen 11, 12 ist fest mit dem Grundkörper 2 verbunden. Ein ausziehbarer Teil der beiden Teleskopschienen 11, 12 ist mit dem in den Fig. 5 und 6 nicht gezeigten Sitz 6 verbunden. Die beiden Teleskopschienen 11, 12 sind durch eine sich in Querrichtung ersteckende Verbindungsplatte 13 miteinander verbunden. Mittels des in den Fig. 5 und 6 gezeigten Verstellmechanismus kann somit der Sitz 6 relativ zum Grundkörper 2 des Rollstuhls linear bewegt werden, um die Sitzhöhe einzustellen.

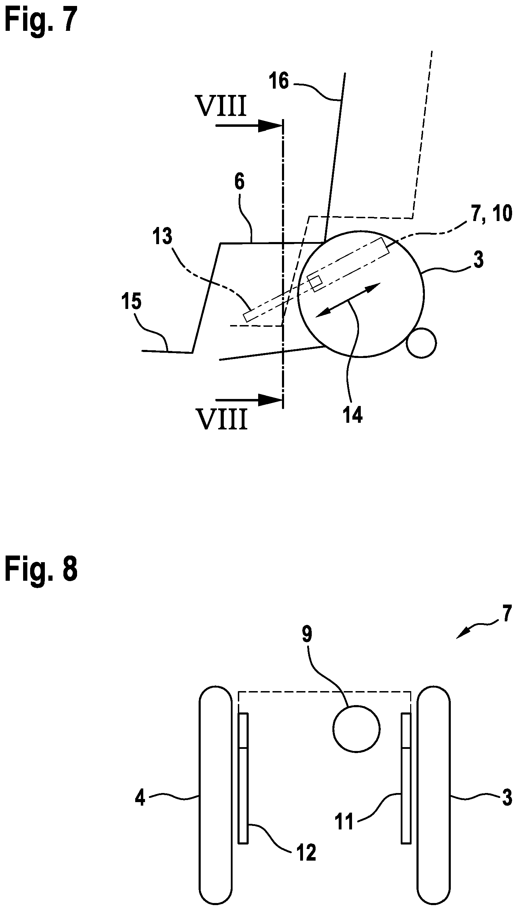

Fig. 7 ist eine Seitenansicht und zeigt schematisch die Anordnung des Verstellmechanismus 7 in dem Rollstuhl 1. Das vordere Ende des Verstellmechanismus 7 ist bezüglich der horizontalen Achse nach unten geneigt, sodass sich die Verbindungsplatte 13 in einer niedrigeren Position im Vergleich zu den feststehenden Teilen der Teleskopschienen 11, 12 befindet. Durch Aktivieren des Verstellmechanismus 7, d. h. durch Einschalten des Linearantriebs 8, wird der Sitz 6 entlang der durch den Doppelpfeil 14 angegebenen Richtung verschoben. Durch die schräge bzw. geneigte Anordnung des Linearantriebs 8 ist eine vertikale Bewegung des Sitzes 6 mit einer horizontalen Verschiebung gekoppelt. Durch den Linearantrieb 8 wird der Sitz 6 somit in zwei Achsen "diagonal" bewegt. Eine Absenkbewegung des Sitzes 6 bewirkt, dass dieser gleichzeitig nach vorne verschoben wird. Beim Anheben des Sitzes 6 wird dieser gleichzeitig nach hinten verschoben.

In Fig. 7 ist schematisch dargestellt, dass beim Verstellen des Sitzes 6 auch die damit fest verbundene Fußstütze 15 und die fest mit dem Sitz 6 verbundene Rückenlehne 16 verschoben werden. Die durchgezogene Line zeigt dabei eine Position, in der sich der Sitz 6 in einer abgesenkten Position befindet, die gestrichelte Linie zeigt eine erhöhte Position des Sitzes 6.

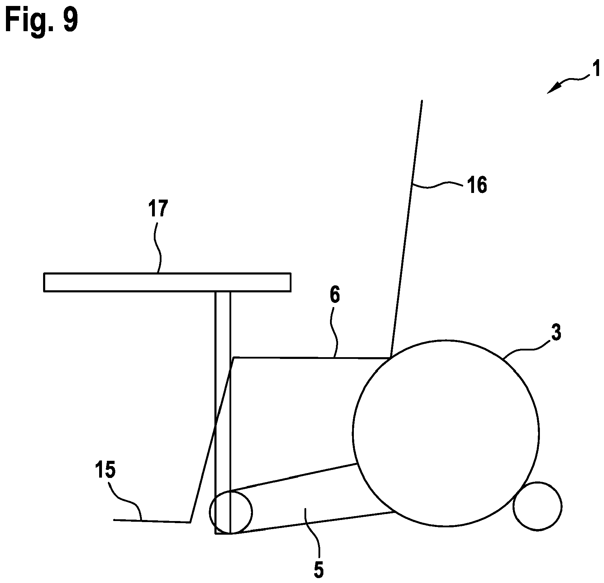

Fig. 8 ist eine geschnittene Ansicht und zeigt die wesentlichen Komponenten des Verstellmechanismus 7 entlang der Line VIII - VIII von Fig. 7 geschnitten. Man erkennt, dass die Teleskopschienen 11, 12 des Verstellmechanismus 7 an der Innenseite der Räder 3, 4 parallel in Längsrichtung angeordnet sind. Der Verstellmechanismus 7 kann somit platzsparend in dem Rollstuhl 1 untergebracht werden. Fig. 9 zeigt den Rollstuhl 1, nachdem der Sitz 6 in eine untere Position bewegt worden ist. Die Fußstütze 15 befindet sich dabei kurz über den Boden. In dieser abgesenkten Position des Rollstuhls 1 kann der Benutzer soweit unter einen Tisch 17 fahren, bis sich seine Beine unterhalb der Tischplatte befinden. Da sich die Fußstütze 15 vor dem Rollstuhl 1 befindet, ist es nicht erforderlich, den Rollstuhl 1 weiter in Richtung des Tischs 17 zu fahren.

Der Rollstuhl 1 weist ein Bedienelement auf, das als Schalter oder als Kombination mehrerer Schalter, als Taster oder als Kombination mehrerer Taster, als Joystick oder als berührungssensitive Oberfläche oder als Kombination der erwähnten Eingabegeräte ausgebildet sein kann. Mittels des Bedienelements kann der Benutzer den Verstellmechanismus 7 bedienen.

## Patentansprüche

1. Selbstbalancierendes Fahrzeug, umfassend:
- zwei axial voneinander beabstandete, an einem Grundkörper (2) angebrachte Räder (3, 4),
- einen mit wenigstens einem Rad (3, 4) gekoppelten elektrischen Antrieb,
- eine Steuerungseinrichtung, die dazu ausgebildet ist, durch Ansteuern des Antriebs das Fahrzeug im Gleichgewicht zu halten,
- eine Aufnahme zum Tragen und Befördern einer Last,
**dadurch gekennzeichnet, dass**
das Fahrzeug einen Verstellmechanismus (7) zum linearen Verschieben der Aufnahme aufweist, der so angeordnet ist, dass die Aufnahme durch die lineare Verschiebung sowohl entlang der Längsachse als auch entlang der Hochachse des Fahrzeugs verstellbar ist.

2. Fahrzeug nach Anspruch 1, wobei der Verstellmechanismus (7) einen Linearantrieb (8) aufweist.

3. Fahrzeug nach Anspruch 1 oder 2, wobei die Aufnahme mittels des Verstellmechanismus (7) stufenlos verstellbar ist.

4. Fahrzeug nach einem der vorangehenden Ansprüche, wobei der Verstellmechanismus (7) einen Teleskopauszug (10) aufweist, der einerseits an dem Grundkörper (2) und andererseits an der Aufnahme angebracht ist.

5. Fahrzeug nach Anspruch 4, wobei der Teleskopauszug (10) eine linke und eine rechte ausziehbare Teleskopschiene (11, 12) aufweist, die durch eine Verbindungsplatte (13) miteinander verbunden sind.

6. Fahrzeug nach einem der vorangehenden Ansprüche, das zum Befahren einer Treppe oder einer Rampe geeignet ist und in einer ersten, im Wesentlichen für einen ebenen Untergrund vorgesehenen Betriebsart durch die an dem Grundkörper (2) angebrachte Räder (3, 4) und in einer zweiten, zum Befahren einer Treppe oder einer Rampe vorgesehenen Betriebsart mittels eines ein Umschlingungsmittel aufweisenden Raupen- oder Kettenfahrwerks (5) antreibbar ist.

7. Fahrzeug nach einem der vorangehenden Ansprüche, wobei die Aufnahme als Sitz (6) ausgebildet ist, an dem eine mit dem Sitz (6) verstellbare Fußstütze (15) angeordnet ist.

8. Fahrzeug nach Anspruch 7, wobei der Sitz (6) soweit nach vorne verstellbar ist, dass sich die Fußstütze (15) vor einem oder dem Raupen- oder Kettenfahrwerk (5) befindet.

9. Fahrzeug nach einem der vorangehenden Ansprüche, das als Rollstuhl (1) ausgebildet ist.
